# FASCICULE DE BREVET EUROPEEN

(11) **EP 3 073 053 B1**
(45) Date de publication et mention de la délivrance du brevet: **13.12.2017**
(21) Numéro de dépôt: 16162468.9
(22) Date de dépôt: 25.03.2016
(51) Int. Cl.: F01D 5/18, F01D 11/04

(54) **AUBE MOBILE DE TURBINE A CONCEPTION AMELIOREE POUR TURBOMACHINE D'AERONEF**
BEWEGLICHE LAUFRADSCHAUFEL EINER TURBINE MIT VERBESSERTEM AUFBAU FÜR STRÖMUNGSMASCHINE EINES LUFTFAHRZEUGS
MOVABLE TURBINE BLADE WITH IMPROVED DESIGN FOR AN AIRCRAFT TURBINE ENGINE

(30) Priorité: 27.03.2015 FR 1552620
(43) Date de publication de la demande: 28.09.2016
(73) Titulaire: SNECMA, 75015 Paris (FR)
(72) Inventeur: NGUYEN, David, Thien-Roger, 77550 MOISSY-CRAMAYEL Cedex (FR); BOISNAULT, Franck, 77550 MOISSY-CRAMAYEL Cedex (FR); JUDET, Maurice, Guy, 77550 MOISSY-CRAMAYEL Cedex (FR); PERSON, Laetitia, 77550 MOISSY-CRAMAYEL Cedex (FR)
(74) Mandataire: Brevalex

(56) Documents cités:
- EP-A1- 2 423 435
- EP-A2- 1 205 634
- EP-A2- 2 551 458

## Description

### DOMAINE TECHNIQUE

L'invention concerne le domaine des aubes mobiles de turbine pour turbomachine d'aéronef. Elle s'applique à tout type de turbomachine, tel que par exemple un turboréacteur ou un turbopropulseur.

### ETAT DE LA TECHNIQUE ANTERIEURE

Les aubes mobiles de turbine font l'objet de nombreux développements afin d'améliorer continuellement leurs performances aérodynamiques, leur masse, leur capacité à être refroidies convenablement, leur facilitée de fabrication, etc.

De telles aubes sont par exemple connues des documents EP 1 630 351 et EP1 706 592. Elles sont intégrées à des roues mobiles de turbine en étant montées sur un disque de conception appropriée pour loger et retenir le pied de ces aubes. De manière conventionnelle, au sein d'une turbine, des roues mobiles sont agencées axialement en alternance avec des distributeurs. Les aubes et les secteurs de distributeur sont équipés de pales et de plateformes, ces dernières délimitant une veine de circulation des gaz chauds à travers la turbine. Les plateformes prennent à leurs extrémités axiales la forme de becquets qui se trouvent en regard deux à deux, au niveau de chaque jonction entre une aube de roue mobile et un secteur de distributeur. Habituellement, pour limiter / empêcher une recirculation des gaz en dehors de la veine par passage de ces gaz entre les deux becquets, les roues mobiles et les distributeurs sont équipés de joints à labyrinthe configurés pour laisser passer un débit de purge calibré, s'écoulant radialement vers l'extérieur. Après son passage par le labyrinthe, le débit de purge peut ainsi rejoindre la veine en transitant par le jeu entre les deux becquets en regard. Ce débit génère une contre-pression limitant / empêchant la recirculation des gaz chauds en dehors de la veine.

Si les nombreux développements opérés sur les aubes mobiles de turbine ont permis d'aboutir à des produits satisfaisants, il existe néanmoins un besoin d'optimiser encore davantage la conception de ces aubes.

### RESUME DE L'INVENTION

Pour répondre partiellement à ce besoin, l'invention a pour objet une aube mobile de turbine de turbomachine d'aéronef comprenant les caractéristiques de la revendication 1.

L'invention est avantageuse non seulement parce qu'elle bénéficie d'une masse allégée grâce à la présence d'une cavité importante au niveau d'au moins l'un des deux becquets, mais également car cette cavité est judicieusement mise à profit pour ajouter une fonctionnalité à l'aube mobile. En effet, un débit de purge est extrait de cette cavité afin de répondre au problème de recirculation des gaz chauds en dehors de la veine. Cette manière de gérer la problématique de recirculation, également connue sous l'appellation de « vortex », permet de s'affranchir de la présence des joints à labyrinthe mis en oeuvre dans les solutions de l'art antérieur. Cette suppression des joints à labyrinthe facilite la conception des roues mobiles et en diminue la masse globale. De plus, en traitant le problème de recirculation des gaz chauds au plus près de l'endroit critique constitué par le jeu entre les becquets en regard, il est possible d'améliorer l'efficacité de la purge, et donc d'augmenter les performances globales de la turbine. L'efficacité du débit de purge s'explique également par la grande facilité de conception de chaque trou de purge, dont le positionnement, le diamètre et l'orientation peuvent être ajustés pour s'adapter au mieux aux singularités géométriques influentes. Grâce à cette efficacité accrue, il en résulte avantageusement un gain en matière de débit d'air prélevé. La flexibilité de conception des trous de purge permet également de limiter les pertes de mélange de gaz dans la veine, augmentant ainsi le rendement de la turbine.

En outre, il est noté que le gain de masse conféré par la présence de chaque cavité de becquet permet de diminuer le chargement mécanique du pied d'aube et de la partie du disque retenant le pied, ce chargement résultant de l'effort centrifuge associé aux aubes en rotation. Grâce à cette diminution du chargement, la conception du disque peut également être optimisée, et sa masse réduite. A titre d'exemple indicatif, il a été constaté qu'un gain en masse d'environ 9% sur chaque aube mobile pouvait avantageusement conduire à réduire la masse du disque d'environ 7%, tout en fonctionnant à des régimes de rotation similaires ou supérieurs.

L'invention comporte de préférence au moins l'une quelconque des caractéristiques optionnelles suivantes, prises isolément ou en combinaison.

Ladite cavité du becquet s'étend sur une longueur circonférentielle correspondant à au moins 75% de la longueur circonférentielle du becquet, ce qui permet de bénéficier d'un gain de masse important.

L'aube comprend une échasse reliant radialement le pied d'aube et la plateforme, les deux becquets faisant chacun saillie circonférentiellement de part et d'autre de l'échasse. Pour augmenter encore davantage le gain en masse, la cavité d'au moins l'un des deux becquets s'étend également dans une partie de ladite échasse.

Chaque becquet comporte une surface radialement extérieure, une surface radialement intérieure, et un chant de jonction entre les surfaces radialement intérieure et extérieure, et ledit au moins un trou de purge traverse ledit chant de jonction.

Chaque trou de purge est sensiblement orienté axialement, ou incliné selon une direction axiale, radialement vers l'extérieur, d'un angle Aa compris entre -10° et 10°.

L'invention a également pour objet un ensemble comprenant une aube mobile de turbine telle que définie ci-dessus, ainsi qu'un secteur de distributeur agencé en regard axialement de ladite aube, ledit secteur de distributeur comprenant une pale et une plateforme délimitant également la veine de circulation des gaz, la plateforme du secteur de distributeur comprenant une extrémité axiale en forme de becquet, située axialement en regard de l'un des deux becquets de l'aube mobile de turbine équipé dudit au moins un trou de purge. De plus, ledit au moins un trou de purge permet le passage d'un débit de purge provenant de la cavité et destiné à limiter / empêcher une recirculation des gaz en dehors de ladite veine par passage entre les deux becquets en regard.

L'invention a également pour objet une roue de turbine pour turbomachine d'aéronef comprenant un disque ainsi qu'une pluralité d'aubes comme celle décrite ci-dessus, chaque aube de turbine étant montée sur le disque.

L'invention a aussi pour objet une turbomachine d'aéronef comprenant au moins une aube mobile de turbine telle que décrite ci-dessus, ou un ensemble tel que décrit ci-dessus, ou encore une roue de turbine telle que décrite ci-dessus.

Enfin, l'invention a pour objet un procédé de fabrication d'une aube mobile de turbine telle que décrite ci-dessus, chaque cavité de becquet étant obtenue par élimination d'un bloc de cire après coulée de l'aube dans un moule, et chaque trou de purge est ensuite de préférence réalisé par usinage du becquet. D'autres techniques que l'usinage peuvent néanmoins être employées, sans sortir du cadre de l'invention.

D'autres avantages et caractéristiques de l'invention apparaîtront dans la description détaillée non limitative ci-dessous.

### BREVE DESCRIPTION DES DESSINS

Cette description sera faite au regard des dessins annexés parmi lesquels ;
- la figure 1 est une vue schématique en coupe axiale d'un turboréacteur à double flux selon l'invention ;
- la figure 2 représente une vue éclatée en perspective d'une aube mobile de turbine du turboréacteur montré sur la figure 1 ;
- la figure 3 représente une vue en demi-coupe axiale d'un ensemble selon l'invention, comprenant une aube mobile de turbine et un secteur de distributeur de turbine ;
- la figure 4 est une vue en perspective de l'une des aubes de la roue de turbine montrée sur l'ensemble de la figure précédente ;
- la figure 5 est une vue coupée selon la ligne V-V de la figure 5, montrant le becquet amont de l'aube et sa cavité ;
- la figure 6 est une vue en coupe prise selon la ligne VI-VI de la figure 5 ;
- les figures 7 et 8 montrent en perspective la forme de la cavité associée au becque amont de l'aube, selon deux angles de vue différents ;
- la figure 9 est une vue coupée selon la ligne IX-IX de la figure 10, montrant le becquet aval de l'aube et sa cavité ;
- la figure 10 est une vue en coupe prise selon la ligne X-X de la figure 9 ;
- les figures 11 et 12 montrent en perspective la forme de la cavité associée au becque aval de l'aube, selon deux angles de vue différents ;
- les figures 13a à 13c montrent différentes possibilité de réalisation pour les trous de purge associés à la cavité du becquet aval ; et
- la figure 14 illustre de manière schématique l'une des étapes de fabrication de l'aube montrée sur la figure 4, selon un procédé propre à l'invention.

### EXPOSE DETAILLE DE MODES DE REALISATION PARTICULIERS

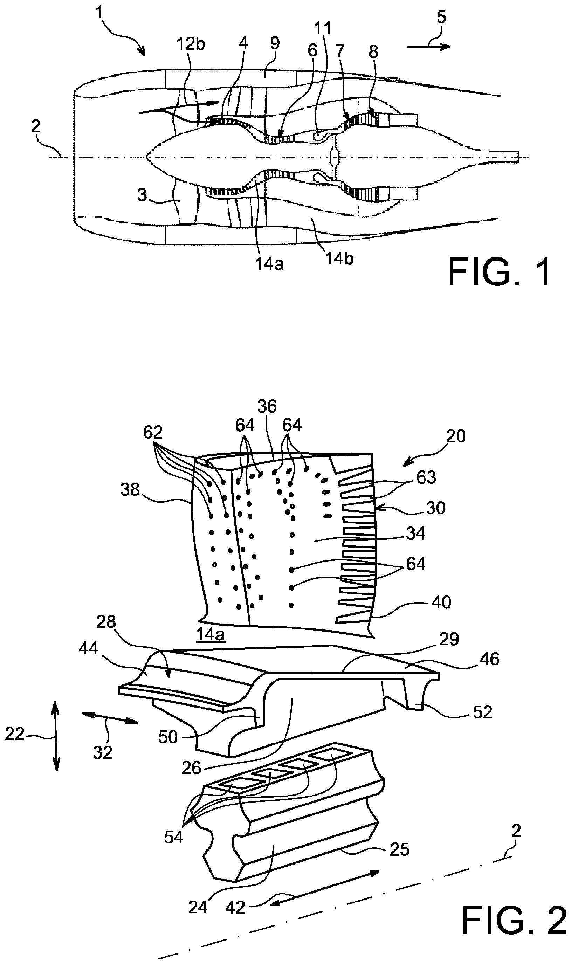

En référence tout d'abord à la figure 1, il est représenté une turbomachine 1 d'aéronef, selon un mode de réalisation préféré de l'invention. Il s'agit ici d'un turboréacteur à double flux et à double corps. Néanmoins, il pourrait s'agir d'une turbomachine d'un autre type, par exemple un turbopropulseur, sans sortir du cadre de l'invention.

La turbomachine 1 présente un axe longitudinal 2 autour duquel s'étendent ses différents composants. Elle comprend, d'amont en aval selon une direction principale 5 d'écoulement des gaz à travers cette turbomachine, une soufflante 3, un compresseur basse pression 4, un compresseur haute pression 6, une chambre de combustion 11, une turbine haute pression 7 et une turbine basse pression 8.

De manière conventionnelle, après avoir traversé la soufflante, l'air se divise en un flux primaire central 12a et un flux secondaire 12b qui entoure le flux primaire. Le flux primaire 12a s'écoule dans une veine principale 14a de circulation des gaz traversant les compresseurs 4, 6, la chambre de combustion 11 et les turbines 7, 8. Le flux secondaire 12b s'écoule quant à lui dans une veine secondaire 14b délimitée radialement vers l'extérieur par un carter moteur, entouré d'une nacelle 9.

La figure 2 représente de manière éclatée une aube mobile 20, destinée à équiper l'une quelconque des turbines 7 et 8, en particulier la turbine haute pression 7. De manière classique, l'aube 20 comporte, dans une direction radiale 22 en allant de l'intérieur vers l'extérieur, un pied d'aube 24, une échasse 26, une plateforme 28 et une pale 30 constituant la partie aérodynamique de l'aube. Le pied d'aube 24 présente une forme extérieure dite « en sapin », permettant son insertion dans une rainure correspondante d'un disque de turbine destiné à porter les aubes mobiles. L'échasse 26 présente habituellement une épaisseur faible selon une direction circonférentielle 32, tandis que la plateforme 28 s'étend également de part et d'autre de l'échasse 26 selon cette même direction circonférentielle 32. Plus précisément, la plateforme 28 s'étend circonférentiellement au-delà de l'intrados 34 et de l'extrados 36 de la pale 30, et s'étend également au-delà d'un bord d'attaque 38 et d'un bord de fuite 40 de la pale, selon une direction axiale 42.

Avec sa surface extérieure 29, la plateforme 28 délimite radialement vers l'intérieur la veine principale 14a. La plateforme 28 présente deux extrémités axiales opposées, chacune formant un becquet. Il s'agit d'un becquet amont 44 situé en amont du bord d'attaque 38, ainsi que d'un becquet aval 46 situé en aval du bord de fuite 40 de la pale 30.

L'aube 20 comprend également deux raidisseurs 50, 52 respectivement associés à chacun des deux becquets 44, 46. Chaque raidisseur 50, 52 s'étendant radialement vers l'intérieur à partir de son becquet associé, sur une longueur circonférentielle sensiblement identique à celle du becquet, et sur une épaisseur axiale faible en comparaison de la longueur circonférentielle. Chaque raidisseur 50, 52 se situe donc également en saillie de part et d'autre de l'échasse 26 selon la direction circonférentielle 32, au niveau des extrémités axiales de cette échasse. En d'autres termes, chaque raidisseur 50, 52 prend la forme globale d'un secteur angulaire de flasque centré sur un axe de rotation de turbine, correspondant à l'axe 2.

De préférence, l'aube 20 est une pièce unique monobloc creuse issue de fonderie, de préférence réalisée par la technique de moulage à cire perdue, comme cela sera détaillé ci-après. L'aube comporte des conduits internes par lesquels circule de l'air de refroidissement prélevé au niveau de l'un des compresseurs 4, 6 du turboréacteur. Ces conduits traversent radialement l'aube, et présentent des bouches d'admission s'ouvrant en face inférieure 25 du pied 24, pour l'alimentation en air frais. A cet égard, une partie de ces conduits 54 est schématisée à travers le pied 24 de la figure 2.

De manière connue, la paroi creuse de la pale 30 comporte des trous traversants et des fentes par lesquels est évacué l'air de refroidissement. A titre indicatif, le bord d'attaque 38 a une forme bombée et il est pourvu d'une série de trous de refroidissements 62 traversant la paroi de la pale dans cette région. Le bord de fuite 40 a quant à lui une forme effilée, et il comporte une série de fentes de refroidissement 63. L'intrados 34, qui est soumis à un échauffement significatif en fonctionnement, comporte également une série de trous traversants 64 répartis à plusieurs endroits sur cet intrados.

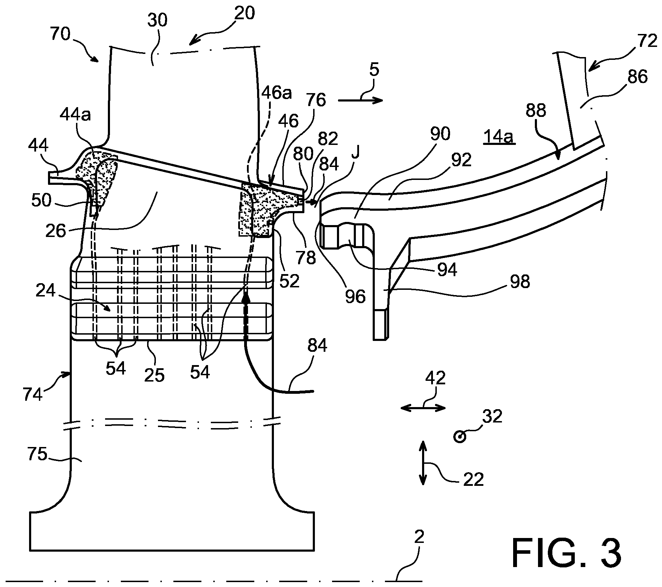

En référence à présent à la figure 3, il est montré un ensemble 70 de la turbine haute pression 7, cet ensemble comprenant l'aube mobile 20 et un secteur de distributeur de turbine 72 situé dans la continuité aval de l'aube 20, en regard axialement. L'aube 20 fait partie d'une roue mobile de turbine 74 centrée sur l'axe 2, cette roue étant équipée d'un disque de turbine 75 qui, à sa périphérie, présente des rainures permettant le maintien des pieds 24 des aubes 20, ces dernières étant réparties tout autour de la périphérie du disque 75.

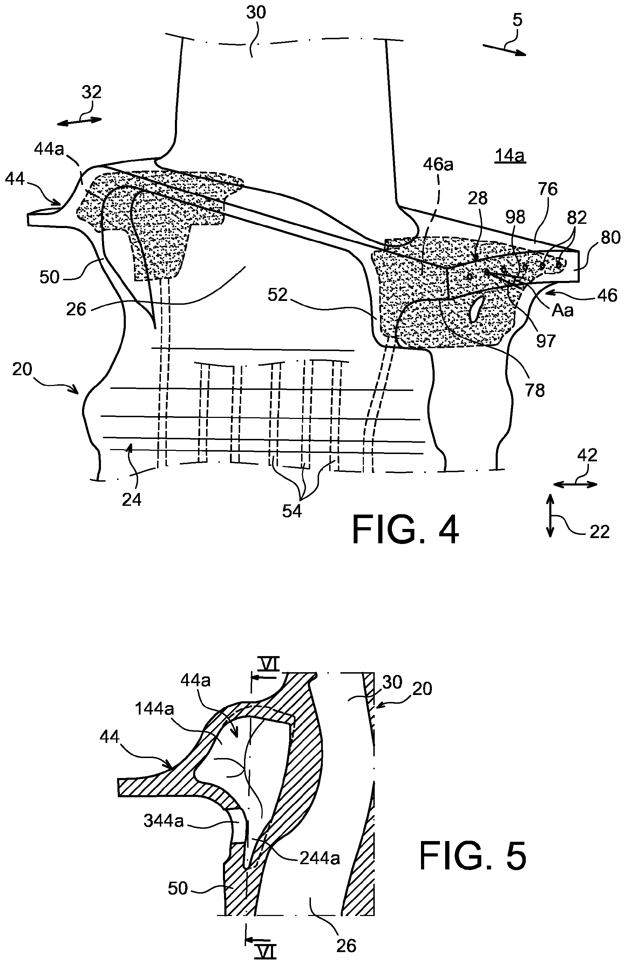

Les figures 3 et 4 montrent l'une des particularités de l'invention, à savoir la présence d'une cavité interne au niveau de chacun des deux becquets amont 44 et aval 46, ces cavités internes étant représentées de manière grisée sur ces figures 3 et 4. Associée au becquet amont 44, la cavité interne 44a est alimentée par un ou plusieurs conduits d'alimentation en air 54 traversant le pied 24 et l'échasse 26. Comme cela sera détaillé ci-après, pour accentuer le gain en masse sur l'aube, la cavité interne 44a s'étend non seulement à l'intérieur du becquet, mais également dans une partie de l'échasse 26 adjacente au becquet amont 44.

De manière analogue, la cavité interne 46a associée au becquet aval 46 est alimentée par un ou plusieurs conduits d'alimentation 54 traversant le pied 24 et l'échasse 26. Toujours pour accentuer le gain en masse sur l'aube, la cavité interne 46a s'étend non seulement à l'intérieur du becquet, mais également dans une partie de l'échasse 26 adjacente au becquet aval 46, et aussi dans une partie du raidisseur aval 52.

Le becquet aval 46 comporte une surface radialement extérieure 76, une surface radialement intérieure 78, et un chant de jonction 80 entre les deux surfaces 76, 78. Le chant 80 est orienté sensiblement axialement, vers l'aval. De ce chant 80 débouchent un ou plusieurs trous de purge 82, faisant communiquer la cavité interne 46a avec l'environnement extérieur du becquet 46. Plus précisément, les trous 82 permettent le passage d'un débit de purge 84 provenant de la cavité 46a et destiné à limiter / empêcher une recirculation des gaz en dehors de la veine 14a par contournement du becquet 46.

A cet égard, il est noté que le secteur de distributeur 72 comprend de manière classique une pale 86 et une plateforme 88 délimitant également la veine 14a. La plateforme 88 présente une extrémité axiale amont en forme de becquet 90, ce dernier étant situé axialement en regard des trous de purge 82. Plus précisément, le becquet amont 90 de secteur 72 comporte une surface radialement extérieure 92, une surface radialement intérieure 94, et un chant de jonction 96 entre les deux surfaces 92, 94. Le chant 96 est orienté sensiblement axialement, vers l'amont en faisant face au chant 80 du becquet aval 46 de l'aube. Entre les deux chants 80, 96, il subsiste un jeu « J » dans lequel est injecté le débit de purge 84, de manière à créer une contre-pression dans la veine 14a destinée à limiter / empêcher la recirculation des gaz chauds en dehors de cette même veine principale. En effet, grâce à la contre-pression réalisée, les gaz chauds du flux primaire ne peuvent sortir de la veine 14a par le jeu « J » entre les deux becquets 46, 90 en regard.

Pour que le débit de purge 84 soit efficace et limite au mieux les pertes de mélange de gaz dans la veine, son orientation et son intensité peuvent être facilement optimisées en adaptant la conception des trous de purge 82 en conséquence. A titre indicatif, chaque trou 82 peut être orienté axialement, à savoir parallèlement ou sensiblement parallèlement à l'axe 2, ou bien en coupe axiale, un angle Aa peut être prévu entre la direction axiale 97 et l'axe central 98 de chaque trou 82. Comme cela a été schématisé sur la figure 4, l'angle Aa peut être compris entre 0 et 10°, dans le sens permettant une injection radiale vers l'extérieur du débit de purge 84. Dans ce cas de figure, le débit 84 est alors orienté dans la veine, mais pourrait alternativement être orienté dans le sens opposé, c'est-à-dire radialement vers l'intérieur dans une zone dite « hors veine ». Dans cette alternative, l'angle Aa peut également être compris entre 0 et 10° par rapport à la direction axiale 97.

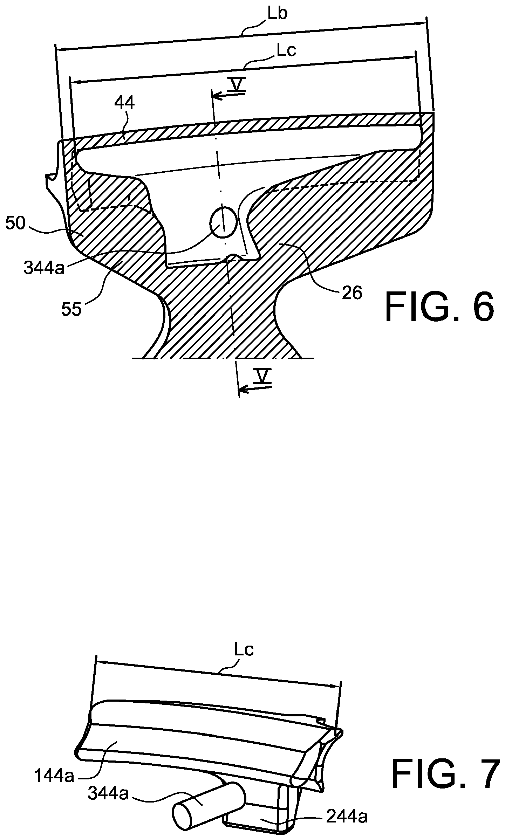

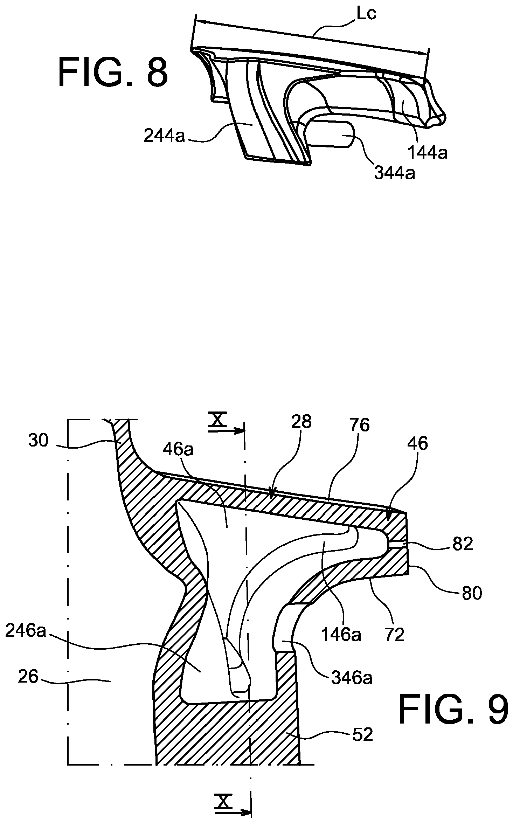

En référence à présent aux figures 5 et 6, il est montré plus précisément la cavité interne 44a associée au becquet amont 44, la forme de cette cavité étant également représentée sur les figures 7 et 8. Comme évoqué précédemment, la cavité 44a s'étend à l'intérieur du becquet 44 sur une longueur circonférentielle Lc supérieure à la longueur circonférentielle Lb du becquet 44. Cette large étendue de la cavité interne 44a permet un gain de matière en conséquence. L'essentiel de cette cavité se trouve donc agencée au sein du becquet 44, avec une première partie 144a de volume important. Une seconde partie 244a prolonge la cavité 44a vers l'aval et radialement vers l'intérieur, dans une portion de l'échasse 26. La seconde partie 244a présente ainsi une épaisseur circonférentielle largement inférieure à la longueur circonférentielle Lc de la première partie 144a. Sur ces figures, il est représenté un orifice de communication 344a entre la seconde partie de cavité 244a et l'extérieur de l'échasse 26. Cependant, lors du procédé de fabrication qui sera décrit ci-après, après élimination de la cire visant à laisser apparaître la cavité 44a, cet orifice 344a est ensuite rebouché.

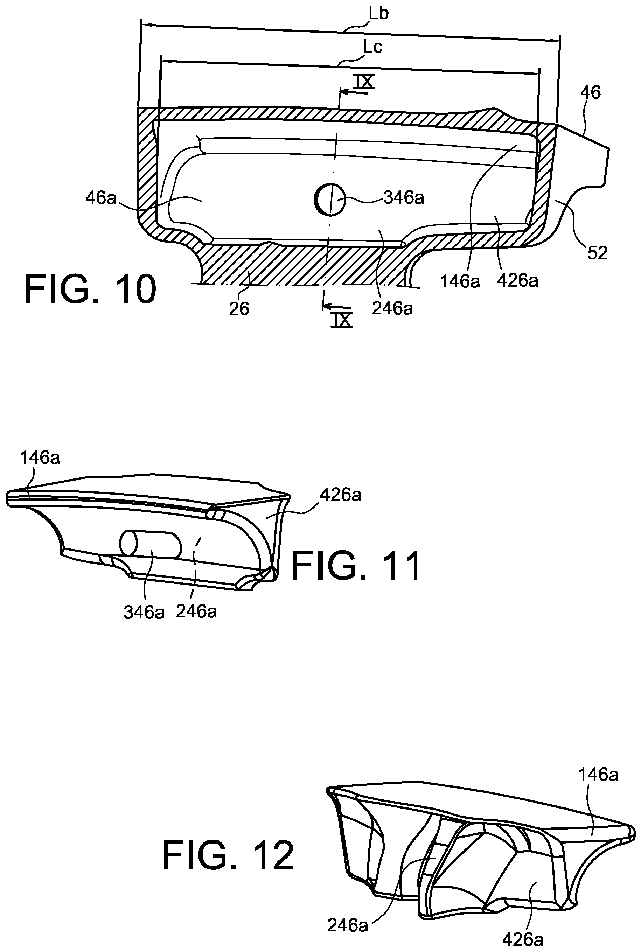

En outre, en référence à présent aux figures 9 et 10, il est montré plus précisément la cavité interne 46a associée au becquet aval 46, la forme de cette cavité étant également représentée sur les figures 11 et 12. Comme évoqué précédemment, la cavité 46a s'étend à l'intérieur du becquet 46 sur une longueur circonférentielle Lc supérieure à la longueur circonférentielle Lb du becquet 46. Cette large étendue de la cavité interne 46a permet également un gain de masse. Une grande portion de cette cavité se trouve agencée au sein du becquet 46, avec une première partie 146a de volume important. Une seconde partie 246a prolonge la cavité 46a vers l'amont et radialement vers l'intérieur, dans une portion de l'échasse 26. La seconde partie 246a présente donc une épaisseur circonférentielle largement inférieure à la longueur circonférentielle Lc de la première partie 146a. Enfin, la cavité 46a comporte une troisième partie 426a s'étendant à l'intérieur du raidisseur 52, sur une longueur circonférentielle Lc sensiblement identique à celle de la première partie 146a agencée dans le becquet 46. La troisième partie 426a prolonge ainsi la première partie 146a radialement vers l'intérieur.

Sur les figures, il est représenté un orifice de communication 346a entre la seconde partie de cavité 246a et l'extérieur de l'échasse 26. Ici aussi, cet orifice 346a est destiné à être rebouché après élimination de la cire visant à laisser apparaître la cavité 46a.

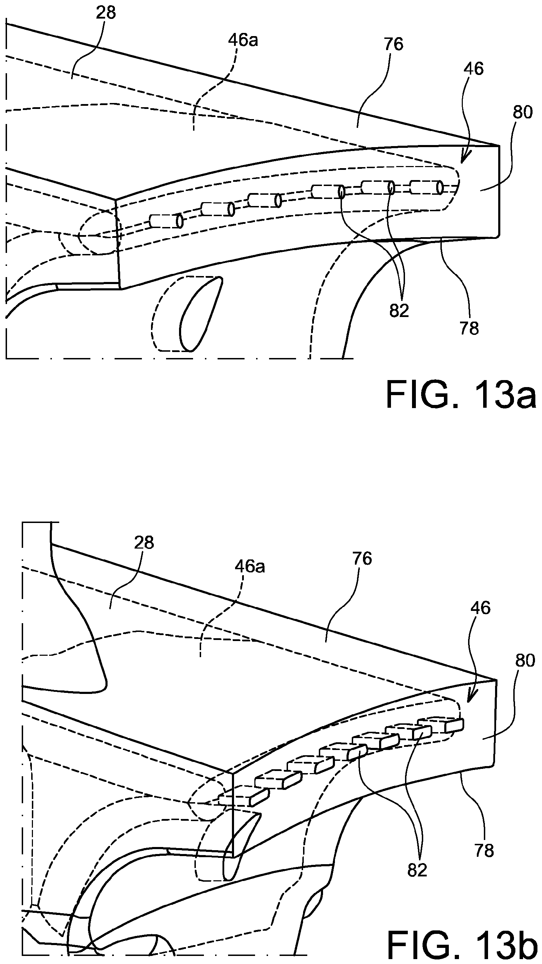

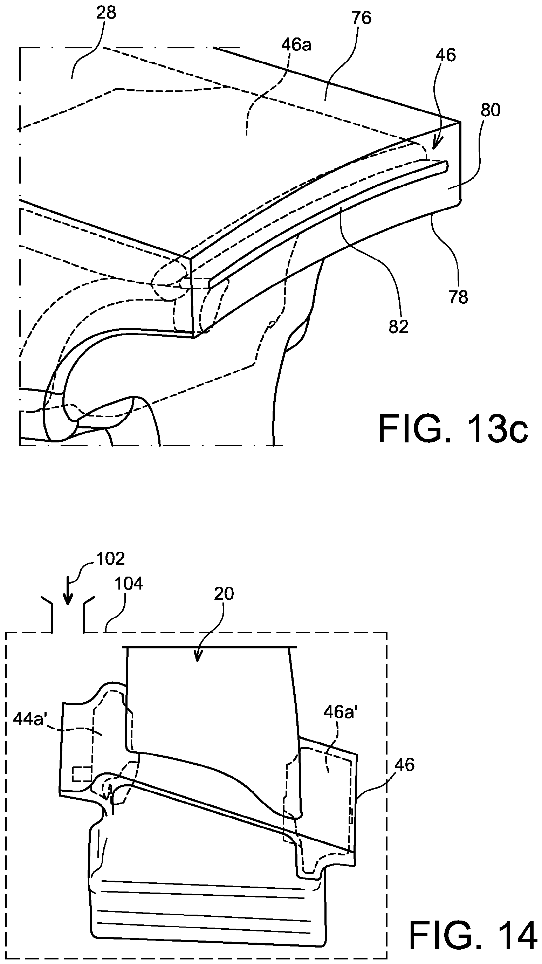

Les figures 13a à 13c montrent différentes possibilités de réalisation pour les trous de purge 82 équipant le becquet aval 46. Sur la figure 13a, plusieurs trous 82 sensiblement cylindriques et de section circulaire sont espacés circonférentiellement les uns des autres, de manière à former une multiperforation à une ou plusieurs rangées. La forme de la section des trous peut être modifiée, par exemple en allongeant cette section dans la direction circonférentielle afin d'obtenir des fentes 82, comme cela a été schématisé sur la figure 13b. Une autre possibilité consiste encore à prévoir une unique fente 82 s'étendant sur tout ou partie de la longueur circonférentielle de la cavité, comme cela a été schématisé sur la figure 13c.

Enfin en référence à la figure 14, il est illustré une étape d'un procédé de fabrication de l'aube 20, par coulée 102 de métal dans un moule 104. Ce dernier est équipé de blocs de cire 44a', 46a' de formes complémentaires de celles des cavités internes désirées 44a, 46a. Après coulée du métal dans le moule 104 et autour des blocs de cire 44a', 46a', ces derniers sont éliminés par une technique conventionnelle, par exemple par agression chimique. Après élimination des blocs, les orifices 344a et 346a décrits en référence aux figures précédentes sont rebouchés au niveau de l'échasse de l'aube.

Les trous de purge 82 précités sont quant à eux réalisés par usinage, par exemple par simples perçages du becquet 46. Cependant, d'autres techniques peuvent être employées. Il peut par exemple être prévu des éléments correspondants dans le moule 104, comme des tiges en céramique, puis l'élimination ultérieure de ces tiges après coulée du métal permet de laisser apparaître les trous de purge désirés.

Bien entendu, diverses modifications peuvent être apportées par l'homme du métier à l'invention qui vient d'être décrite, uniquement à titre d'exemples non limitatifs.

## Revendications

1. Aube mobile (20) de turbine pour turbomachine d'aéronef comprenant un pied (24), une pale (30) et une plateforme (28) interposée entre la pale et le pied et délimitant une veine de circulation des gaz (14a), la plateforme (28) présentant deux extrémités axiales formant respectivement deux becquets (44, 46) dont au moins l'un d'eux présente une cavité interne (46a) destinée à être alimentée en air provenant du pied (24) de l'aube, au moins l'un des deux becquets (46) est percé d'au moins un trou de purge (82) pour le passage d'un débit de purge (84) provenant de la cavité interne (46a) et destiné à limiter / empêcher une recirculation des gaz en dehors de ladite veine (14a) par contournement dudit becquet (46) **caractérisé en ce que** l'aube comprend un raidisseur (50, 52) associé à chacun des deux becquets (44, 46), chaque raidisseur s'étendant radialement vers l'intérieur à partir de son becquet associé, sur une longueur circonférentielle de préférence sensiblement identique à celle du becquet, et **en ce que** ladite cavité (46a) du becquet aval (46) s'étend également dans une partie de son raidisseur associé (52).

2. Aube selon la revendication 1, **caractérisée en ce que** ladite cavité interne (46a) du becquet (46) s'étend sur une longueur circonférentielle (Lc) correspondant à au moins 75% de la longueur circonférentielle (Lb) du becquet (46).

3. Aube selon la revendication 1 ou la revendication 2, **caractérisée en ce qu'**elle comprend une échasse (26) reliant radialement le pied d'aube (24) et la plateforme (28), les deux becquets (44, 46) faisant chacun saillie circonférentiellement de part et d'autre de l'échasse (28), et **en ce que** ladite cavité (44a, 46a) d'au moins l'un des deux becquets (44, 46) s'étend également dans une partie de ladite échasse (28).

4. Aube selon l'une quelconque des revendications précédentes, **caractérisée en ce que** chaque becquet (44, 46) comporte une surface radialement extérieure (76), une surface radialement intérieure (78), et un chant de jonction (80) entre les surfaces radialement intérieure et extérieure, et **en ce que** ledit au moins un trou de purge (82) traverse ledit chant de jonction (80).

5. Aube selon l'une quelconque des revendications précédentes, **caractérisée en ce que** chaque trou de purge (82) est sensiblement orienté axialement, ou incliné selon une direction axiale (97), radialement vers l'extérieur, d'un angle Aa compris entre -10° et 10°.

6. Ensemble (70) comprenant une aube mobile de turbine (20) selon l'une quelconque des revendications précédentes ainsi qu'un secteur de distributeur (72) agencé en regard axialement de ladite aube (20), ledit secteur de distributeur comprenant une pale (86) et une plateforme (88) délimitant également la veine de circulation des gaz (14a), la plateforme (88) du secteur de distributeur (72) comprenant une extrémité axiale en forme de becquet (90), située axialement en regard de l'un des deux becquets (46) de l'aube mobile de turbine (20) équipé dudit au moins un trou de purge (82), et en ce que ledit au moins un trou de purge (82) permet le passage d'un débit de purge (84) provenant de la cavité interne (46a) et destiné à limiter / empêcher une recirculation des gaz en dehors de ladite veine (14a) par passage entre les deux becquets en regard (46, 90).

7. Roue de turbine (74) pour turbomachine d'aéronef comprenant un disque (75) ainsi qu'une pluralité d'aubes (20) selon l'une quelconque des revendications 1 à 5, chaque aube de turbine étant montée sur le disque.

8. Turbomachine (1) d'aéronef comprenant au moins une aube mobile (20) de turbine selon l'une quelconque des revendications 1 à 5, ou un ensemble (70) selon la revendication 6, ou encore une roue de turbine (74) selon la revendication 7.

9. Procédé de fabrication d'une aube mobile de turbine (20) selon l'une quelconque des revendications 1 à 5, **caractérisé en ce que** chaque cavité de becquet (44a, 46a) est obtenue par élimination d'un bloc de cire (44a', 46a') après coulée de l'aube dans un moule (104), et **en ce que** chaque trou de purge (82) est ensuite de préférence réalisé par usinage du becquet (46).

## Patentansprüche

1. Laufschaufel (20) einer Turbine für eine Turbomaschine eines Luftfahrzeugs, mit einem Fuß (24), einem Blatt (30) und einer Plattform (28), die zwischen dem Blatt und dem Fuß eingefügt ist und einen Kanal für die Zirkulation der Gase (14a) begrenzt, wobei die Plattform (28) zwei axiale Enden aufweist, die jeweils zwei Spoiler (44, 46) ausbilden, von denen wenigstens einer einen Innenhohlraum (46a) aufweist, der dazu bestimmt ist, mit von dem Fuß (24) der Schaufel kommender Luft beaufschlagt zu werden,
wenigstens einer der beiden Spoiler (46) ist von wenigstens einem Entlüftungsloch (82) für den Durchgang einer Entlüftungsmenge (84), die aus dem Innenhohlraum (46a) stammt und dazu bestimmt ist, eine Rezirkulation der Gase außerhalb des Kanals (14a) durch Umgehung des Spoilers (46) zu begrenzen / verhindern, durchbohrt,
**dadurch gekennzeichnet, dass** die Schaufel eine Aussteifung (50, 52), welche jedem der beiden Spoiler (44, 46) zugeordnet ist, umfasst, wobei jede Aussteifung sich von ihrem zugeordneten Spoiler ausgehend, über eine Umfangslänge, die vorzugsweise mit derjenigen des Spoilers im Wesentlichen identisch ist, radial nach innen erstreckt, und dass der Hohlraum (46a) des stromabwärtigen Spoilers (46) sich auch in einem Teil seiner zugeordneten Aussteifung (52) erstreckt.

2. Schaufel nach Anspruch 1, **dadurch gekennzeichnet, dass** der Innenhohlraum (46a) des Spoilers (46) sich über eine Umfangslänge (Lc) erstreckt, die wenigstens 75 % der Umfangslänge (Lb) des Spoilers (46) entspricht.

3. Schaufel nach Anspruch 1 oder Anspruch 2, **dadurch gekennzeichnet, dass** sie eine Stelze (26) umfasst, die den Schaufelfuß (24) und die Plattform (28) radial verbindet, wobei die beiden Spoiler (44, 46) jeweils in Umfangsrichtung auf beiden Seiten der Stelze (26) vorspringen, und dass der Hohlraum (44a, 46a) von wenigstens einem der beiden Spoiler (44, 46) sich auch in einem Teil der Stelze (26) erstreckt.

4. Schaufel nach einem der vorhergehenden Ansprüche, **dadurch gekennzeichnet, dass** jeder Spoiler (44, 46) eine radial äußere Fläche (76), eine radial innere Fläche (78) und eine Verbindungskante (80) zwischen der radial inneren und der radial äußeren Fläche aufweist, und dass das wenigstens eine Entlüftungsloch (82) die Verbindungskante (80) durchquert.

5. Schaufel nach einem der vorhergehenden Ansprüche, **dadurch gekennzeichnet, dass** jedes Entlüftungsloch (82) im Wesentlichen axial ausgerichtet ist oder in einer axialen Richtung (97) um einen Winkel Aa zwischen -10° und 10° radial nach außen geneigt ist.

6. Anordnung (70), umfassend eine Turbinenlaufschaufel (20) nach einem der vorhergehenden Ansprüche sowie einen Leitradsektor (72), der axial gegenüber der Schaufel (20) angeordnet ist, wobei der Leitradsektor ein Blatt (86) und eine Plattform (88), die ebenfalls den Kanal für die Zirkulation der Gase (14a) begrenzt, umfasst, wobei die Plattform (88) des Leitradsektors (72) ein axiales Ende in Form eines Spoilers (90) umfasst, das axial gegenüber von einem der beiden Spoiler (46) der Turbinenlaufschaufel (20), welcher mit dem wenigstens einen Entlüftungsloch (82) ausgestattet ist, gelegen ist, und dass das wenigstens eine Entlüftungsloch (82) den Durchgang einer Entlüftungsmenge (84) ermöglicht, die aus dem Innenhohlraum (46a) stammt und dazu bestimmt ist, eine Rezirkulation der Gase außerhalb des Kanals (14a) durch Durchgang zwischen den beiden gegenüberliegenden Spoilern (46, 90) zu begrenzen / verhindern.

7. Turbinenrad (74) für eine Turbomaschine eines Luftfahrzeugs, umfassend eine Scheibe (75) sowie eine Vielzahl von Schaufeln (20) nach einem der Ansprüche 1 bis 5, wobei jede Turbinenschaufel an der Scheibe angebracht ist.

8. Turbomaschine (1) eines Luftfahrzeugs, umfassend wenigstens eine Turbinenlaufschaufel (20) nach einem der Ansprüche 1 bis 5, oder eine Anordnung (70) nach Anspruch 6 oder aber ein Turbinenrad (74) nach Anspruch 7.

9. Verfahren zur Herstellung einer Turbinenlaufschaufel (20) nach einem der Ansprüche 1 bis 5, **dadurch gekennzeichnet, dass** jeder Spoilerhohlraum (44a, 46a) durch Entfernen eines Wachsblocks (44a`, 46a') nach dem Gießen der Schaufel in einer Form (104) erhalten wird und dass jedes Entlüftungsloch (82) anschließend vorzugsweise durch Bearbeiten des Spoilers (46) ausgebildet wird.

## Claims

1. Turbine blade (20) for an aircraft turbomachine comprising a root (24), an airfoil (30) and a platform (28) inserted between the airfoil and the root and delimiting a gas circulation flowpath (14a), the platform (28) having two axial ends each forming an angel wing (44, 46) of which at least one has an internal cavity (46a) that will be supplied with air from the root (24) of the blade,
at least one of the two angel wings (46) is drilled with at least one bleed hole (82) for passage of a bleed flow (84) from the internal cavity (46a) that will limit / prevent gas recirculation outside said flowpath (14a) by bypassing said angel wing (46)
**characterised in that** the blade comprises a stiffener (50, 52) associated with each of the two angel wings (44, 46), each stiffener extending radially inwards from its associated angel wing, along a circumferential length approximately equal to the length of the angel wing, and **in that** said cavity (46a) of the upstream angel wing (46) of at least one of the two angel wings (46) also extends along part of its associated stiffener (52).

2. Blade according to claim 1, **characterised in that** said internal cavity (46a) of the angel wing (46) extends along a circumferential length (Lc) corresponding to at least 75% of the circumferential length (Lb) of the angel wing (46).

3. Blade according to claim 1, **characterised in that** it comprises a shank (26) radially connecting the root of the blade (24) and the platform (28), the two angel wings (44, 46) each projecting circumferentially on each side of the shank (28), and **in that** said cavity (44a, 46a) of at least one of the two angel wings (44, 46) also extends into part of said shank (28).

4. Blade according to claim 1, **characterised in that** each angel wing (44, 46) comprises a radially outer surface (76), a radially inner surface (78), and a junction edge (80) between the radially inner surface and the radially outer surface, and **in that** said at least bleed hole (82) passes through said junction edge (80).

5. Blade according to claim 1, **characterised in that** each bleed hole (82) is oriented approximately along the axial direction or is inclined radially outwards from the axial direction (97), by an angle Aa between -10° and 10°.

6. Assembly (70) comprising a turbine blade (20) according to claim 1 and a nozzle segment (72) arranged axially facing said blade (20), said nozzle segment comprising an airfoil (86) and a platform (88) also delimiting the gas circulation flowpath (14a), the platform (88) of the nozzle segment (72) comprising an axial end in the form of an angel wing (90), axially facing one of the two angel wings (46) of the turbine blade (20) provided with said at least one bleed hole (82), and in that said at least one bleed hole (82) carries a bleed flow (84) originating from the internal cavity (46a) and that will limit / prevent recirculation of gas outside said flowpath (14a) by passing between the two facing angel wings (46, 90).

7. Turbine wheel (74) for an aircraft turbomachine comprising a disk (75) and a plurality of blades (20) according to any one of claims 1 to 5, each turbine blade being mounted on the disk.

8. Aircraft turbomachine (1) comprising at least one turbine blade (20) according to any one of claims 1 to 5, or an assembly (70) according to claim 6, or a turbine wheel (74) according to claim 7.

9. Method of manufacturing a turbine blade (20) according to claim 1, **characterised in that** each angel wing (44a, 46a) cavity is achieved by eliminating a wax block (44a', 46a') after casting the blade in a mould (104), and **in that** each bleed hole (82) is then made by machining the angel wing (46).
